Europäisches Patentamt

(19) European Patent Office

Office européen des brevets

(11) Publication number: **0 459 738 A2**

# (12) EUROPEAN PATENT APPLICATION

(21) Application number: 91304781.7

(22) Date of filing: 28.05.91

(51) Int. Cl.⁵: **E21B 17/20, E21B 17/18**

(30) Priority: 26.05.90 GB 9011873

(43) Date of publication of application:
04.12.91 Bulletin 91/49

(84) Designated Contracting States:
DE FR GB

(71) Applicant: POLYMER APPLICATIONS
LIMITED
Broomhill Road
Stonehaven,Kincardineshire AB3 2NH (GB)

(72) Inventor: Spears, Graeme Kenneth
Redridge Cottage, Den of Cults
Cults, Aberdeen AB1 9NN (GB)

(74) Representative: Pattullo, Norman et al
Murgitroyd and Company Mitchell House 333
Bath Street
Glasgow G2 4ER (GB)

(54) **A control line.**

(57) A control line (1) and a method of manufacturing a control line (1) for use in a borehole is disclosed. The control line (1) comprises one or more tubes (2, 3) each encapsulated in a separate inner sheath (4, 5) which are then encapsulated in a single outer sheath (6). The inner sheaths (4, 5) and the outer sheath (6) are of different extendible polymeric materials. Typically one of the polymeric materials is a high performance material, such as a Teflon, and the other is a low performance material, such as nylon. In addition, the composition of the inner and outer sheaths nay vary along the longitudinal axis of the control line so that different polymeric materials are used on different sections of the control line.

FIG.1

EP 0 459 738 A2

The invention relates to control lines and in particular, but not exclusively, control lines for use in oil or gas producing boreholes, or in geothermal applications.

Conventional control lines for use in downhole applications have comprised one or more metal tubes containing fluid, cable, fibre optics or electrically conducting wire to operate apparatus such as control valves in the well. In addition, such tubes can be used to inject chemicals or gases into the well. Conventionally the steel tubes have been encapsulated in a single layer of an extrudable polymeric material which forms a sheath to protect the metal tube from mechanical damage. The cross section of the sheath may be formed into a shape to enhance crush resistance during sealing of the blow-out preventers in the event of an emergency surge in well pressure from a blow-out.

However, these conventional control lines have a number of significant disadvantages. In particular, in order to connect the control line to the apparatus in the borehole, it is necessary to remove the sheath from the steel tubing in the region adjacent to the apparatus. This can be a time-consuming procedure as it is necessary to avoid damaging the metal tubing when removing the sheath from the tubing. In addition, removing the sheath exposes the tubing which may then be exposed to well fluid at high temperatures, in some cases in excess of 300°F, and high pressures, which may be up to 5,000psi. This may lead to chemical attack of the tubing. Also, it is common practice to encapsulate a number of metal tubes in one sheath and so it is often difficult to correctly identify the individual tubes. This can result in the tubes being wrongly connected to the apparatus.

In addition, the lengths of control line required in some applications may be up to 15,000 feet long. Hence, it is necessary to use a considerable amount of polymeric material to form the sheath. In many applications, there are sections of the borehole in which it is necessary to use high performance polymeric materials, such as teflon materials, which are very expensive. This means that while it is necessary to use these high performance polymeric materials for certain sections of the borehole, there are long sections of the borehole in which it is not necessary to use these high performance materials. This results in a high performance, expensive material being used in the sheath in sections of the borehole where a high performance material is not required.

In accordance with a first aspect of the present invention, a control line for use in a borehole comprises a tube through which a control signal or a fluid may be passed from a control station to a remote location in the borehole, and a sheath comprising a first extrudable polymeric material on a first portion of the line and a second extrudable polymeric material on a second portion of the control line adjacent to the first portion along the longitudinal axis of the line.

In accordance with a second aspect of the present invention, a method of manufacturing a control line for use in a borehole comprises forming a sheath on a tube by extruding a first polymeric material onto a first portion of the tube, and extruding a second polymeric material, which is melt compatible with the first polymeric material, onto a second portion of the tube, adjacent to the first portion along the longitudinal axis of the line, such that the sheath is continuous between the first and second portions.

In accordance with a third aspect of the present invention, a control line for use in a borehole comprises a tube, through which a control signal or fluids may be passed from a control station to a remote location in the borehole, and a sheath comprising an inner sheath of a first extrudable polymeric material covering the outer surface of the tube and an outer sheath of a second extrudable polymeric material covering the outer surface of the inner sheath and the tube.

In accordance with a fourth aspect of the present invention, a method of manufacturing a control line for use in a borehole comprises forming a sheath on a tube by extruding an inner sheath of a first extrudable polymeric material onto the tube, and then extruding an outer sheath of a second extrudable polymeric material onto the inner sheath.

The first second, third and fourth aspects of the present invention have the advantage of enabling different polymeric materials to form the sheath of the control line.

The first and second aspects of the present invention also have the advantage that different polymeric materials may be used on different longitudinal sections of the control line.

The third and fourth aspects of the invention also have the advantage of enabling the outer sheath to be stripped from the line while the inner sheath protects the tubes from damage during stripping. They also enable different polymeric materials to be used for the inner and outer sheaths.

This would enable, for example, a high performance polymeric material to be used as the outer sheath and a less expensive low performance polymeric material to be used as the inner sheath and the inner sheath would be protected by the outer sheath from property degradation due to extremes of temperature and/or chemicals. This would enable more cost effective control lines to be manufactured.

Alternatively, a high performance material such as a Teflon could be used as the inner sheath, for example to protect the tubes and a low performance material could be used to form the outer sheath. As high performance materials such as Teflons tend to be very expensive, this would enable high performance control lines to be manufactured more economically.

Typically, there are-a number of tubes and preferably each tube is surrounded by a separate inner sheath and a single outer sheath encapsulates all the inner sheaths containing the tubes. Typically, each inner sheath has a circular cross section.

By providing a separate inner sheath for each tube, it is possible to pigment the individual inner sheaths so that each tube is colour-coded by the inner sheath to enable it to be more easily identified by an operator.

Preferably, the melting point of the polymeric material used for the outer sheath is less than or equal to the melting point of the polymeric material used for the inner sheath.

Typically, different polymeric materials may be used along the length of the control line. This enables the control line to be manufactured so that expensive high performance polymeric materials are only used on the control line where necessary.

Typically, the tubes contain a fluid, a cable or an electrically conducting wire for passing a control signal from the control station through the tube by means of a change in pressure or flow of the fluid through the tubes, movement of the cable, or an electrical signal, respectively to operate apparatus at a remote location.

Alternatively, the control line may be used to inject fluids such as chemicals or gases, for example nitrogen, into the well. Typically, in this alternative example the fluids are passed through the tubes from the control station for injection into the well at a remote location.

Preferably, where the inner sheath has a circular cross section, the external dimensions of the inner sheath are such that the ends of the tube may be connected without having to strip the inner sheath from the tube. This has the advantage of not exposing the ends of the tube to corrosive attack and hence inexpensive tubing such as stainless steel can be used in environments where expensive, exotic alloys would normally be used.

An example of a high performance material is a Teflon such as ethylene trifluoroethylene and examples of low performance materials are nylon 11, nylon 6 and polypropylene.

Typically, where the polymeric material is changed along the length of the control line, there is a transition zone between the polymeric materials which typically occurs over a length of 200 feet.

Filler materials, such as mineral fillers, may be added to the polymeric materials to enhance or alter their physical properties. For example, to enhance crush resistance, friction wear resistance or to reduce cost.

In addition, it is possible to combine the third and first aspects of the invention, to provide a control line with an inner and outer sheath and in which one or both of the inner and outer sheaths comprise different materials along the longitudinal axis of the control line.

The terms "different polymeric materials" and "first and second polymeric materials" includes polymeric materials which are similar to each other but have a different chemical structure, for example nylon 6 and nylon 11. The terms also include polymeric materials with the same basic polymer but with different additives in their composition.

Examples of a control line in accordance with the invention will now be described with reference to the accompanying drawings, in which:-

Fig. 1 is a plan view of a first example of a control line;

Fig. 2 is a cross-sectional view along the line A-A in Fig. 1; and,

Fig. 3 shows a second example of a control line.

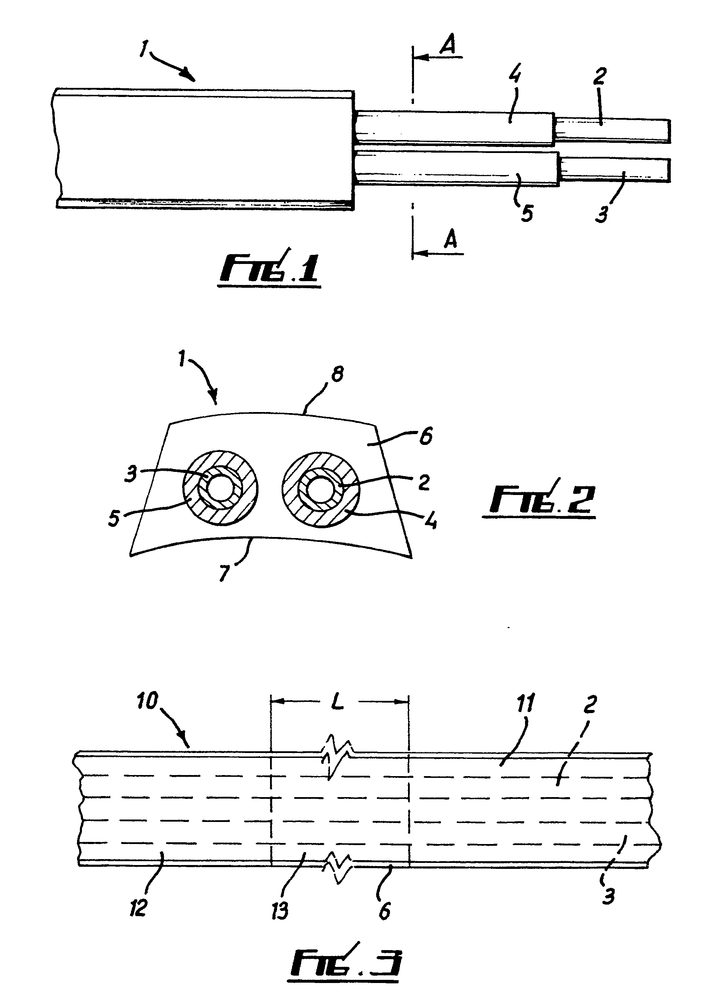

Fig. 1 shows a control line 1 which has two control tubes 2, 3 which are typically stainless steel or a nickel alloy. However, other materials such as exotic alloys could be used.

Covering each control line 2, 3 is an inner sheath 4, 5 which is formed from an extrudable polymeric material which is extruded onto the control tubes 2, 3. In this example, the inner sheaths 4, 5 are formed from nylon 6. However, any other extrudable polymeric material could be used, such as polypropylene, nylon 11, Teflons, such as ethylene trifluoroethylene, or elastomeric materials.

Surrounding the inner sheaths 4, 5 and the control tubes 2, 3 is an outer sheath 6, also of an extrudable polymeric material which is formed by extrusion onto the inner sheaths 4, 5. In this example, the outer sheath 6 is an elastomeric material such as ethylene-propylene diene monomer (EPDM). However, thermo-plastic elastomers or other plastic materials could be used such as those used for the inner sheaths 4, 5. The melting point of the material used for the outer sheath may be less than or equal to the melting point of the material used for the inner sheath 4, 5 in order to prevent bonding of the outer sheath 6 to the inner sheaths 4, 5.

Typically, the material used for the inner sheaths 4, 5 is pigmented so that each inner sheath 4, 5 is of a different colour in order to enable the control tubes 2, 3 to be easily identified by an operator.

As shown in Fig. 2, the external surface of the outer sheath 6 has a concave surface 7 and a convex surface 8. The concave surface 7 enables the control line 1 to conform to the surface of production tubing (not shown) in a borehole and the convex surface 8 enables blow-out preventers at a wellhead (not shown) to conform and seal around the control line in an emergency blow-out situation. In addition, where the outer sheath 6 is of an elastomeric material, the elastomeric material enhances the fitting of the control line to the production tubing and also enhances the sealing of the blow-out preventers.

The use of an elastomer to form the sheath 6 also facilitates the easy stripping of the sheath 6 from the inner sheaths 4, 5 on the control tubes 2, 3. This combined with the presence of the inner sheaths 4, 5 helps prevent damage to the control tubes 2, 3 during stripping of the sheath 6. As the inner sheaths 4, 5 have a circular cross section, it is possible for an operator to couple the ends of the control tubes 2, 3 without having to remove the inner sheaths 4, 5 from the control tubes 2, 3, and this also helps prevent subsequent damage or corrosion to the control tubes 2, 3.

By using different polymeric materials for the inner sheaths 4, 5 and the outer sheath 6, it is possible to configure the control line 1 to the application for which it is intended. For example, a Teflon material could be used to form the outer sheath 6 and nylon 6 could be used to form the inner sheaths 4, 5. Teflon materials typically have a high resistance to temperature and are very inert to chemicals. Nylon 6, while being resistant to high temperatures, is not as inert to chemicals and so the Teflon outer sheath 6 would protect the nylon 6 inner sheaths 4, 5 from chemicals and hydrolytic attack.

It would also be possible to form the outer sheath 6 from nylon 11 which has good mechanical properties and is resistant to abrasion, and the inner sheaths 4, 5 could be formed from a Teflon material. Teflon materials are generally very resistant to water absorption and this would protect the steel tubes 2, 3 from corrosion. This would enable inexpensive tubing such as stainless steel to be used to form the control tubes 2, 3 as opposed to exotic alloys which do not corrode but which are very expensive.

As another example of how the configuration shown in Figs. 1 and 2 can be utilised, temperatures within a borehole can be as high as 350°F. In these situations, it is not possible to use a less expensive polymeric material such as nylon 11 with conventional control lines, as nylon 11 can only be used up to a continuous use temperature of approximately 200°F. Therefore, conventionally, it has been necessary to manufacture the control line entirely from a high temperature material such as ethylene chlorotrifluoroethylene, which will withstand temperatures of up to 350°F. However, these high temperature materials tend to be very expensive. However, by using the configuration shown in Figs. 1 and 2, it is possible to form the outer sheath 6 from ethylene chlorotrifluoroethylene and to form the inner sheaths 4, 5 from nylon 11. The outer sheath 6 of ethylene chlorotrifluoroethylene would then protect the nylon 11 from the high temperature in the borehole. This enables a more cost effective control line to be manufactured by significantly reducing the amount of ethylene chlorotrifluoroethylene which has to be used to form the control line 1.

Fig. 3 shows a second example of a control line 10 having two control tubes 2, 3 (shown in phantom) with an outer sheath 6 encapsulating the control tubes 2, 3. In Fig. 3, the right-hand section 11 of the outer sheath 6 is formed from a high performance material such as a fluoro polymer which could be ethylene chlorotrifluoroethylene. The left-hand section 12 of the outer sheath 6 is formed from a relatively inexpensive material such as nylon 11. Between the left-hand section 12 and the right-hand section 11 is a transition section 13, which is a mixture of nylon 11 and ethylene chlorotrifluoroethylene. Typically, the transition section 13 in a control line 10 would be about 200 feet long.

The example shown in Fig. 3 is useful where a control line has a length greater than about 8,000 feet and it is necessary to use a high performance material such as ethylene chlorotrifluoroethylene during certain sections of the control line, for example, at the bottom of a borehole for the first 2,000 feet where there may be temperatures in the region of 300°F. When the control line reaches sections of the borehole where the temperature is lower, the outer sheath 6 can be changed to be formed from nylon 11, which is a less expensive material than ethylene chlorotrifluoroethylene, but which will not withstand temperatures of 300°F.

The control line 10 shown in Fig. 3 can be manufactured by first extruding the chloroltrifluoroethylene, for example, for the first 2,000 feet of the control line and then gradually changing the polymeric material to nylon 6 to form the remainder of the control line 10. In the transition zone 13 the concentration of nylon 6 will gradually increase from 0% at the right-hand side of the transition zone to 100% at the right-hand side of the transition zone, and the concentration of ethylene chlorotrifluoroethylene will gradually decrease from 100% at the right-hand side of the transition zone 13 to 0% at the left-hand side of the transition zone 13. This example also enables a more economical control line 10 to be manufactured by only using an expensive high performance material in sections of the control line where it is necessary.

The method described above for manufacturing the control line 10 shown in Fig. 3 could also be used for manufacturing the control line 1 shown in Figs. 1 and 2 so that, for example, the composition of the inner sheaths 4, 5 could change along their lengths and/or the composition of the outer sheath 6 could change along its length. This would enable sections of the control line to be designed to suit different ambient conditions in different sections of the borehole.

In addition, composite materials could be used to form the sheaths 4, 5, 6 to obtain the benefits of different materials. Also mineral fillers could be added to the polymeric materials, for example, to enhance the mechanical properties of the materials, such as crush resistance, frictional wear, resistance to cutting or tearing and to contribute to cost reduction.

Modifications and improvements may be incorporated without departing from the scope of the invention.

## Claims

1. A control line for use in a borehole comprising a tube (23), through which a control signal or fluids may be passed from a control station to a remote location in the borehole, and a sheath comprising an inner sheath (4, 5) of a first extrudable polymeric material covering the outer surface of the tube (2, 3) and an outer sheath (6) of a second extrudable polymeric material covering the outer surface of the inner sheath (4, 5) and the tube (2, 3).

2. A control line according to Claim 1, wherein one of the first and second polymeric materials is a high performance polymeric material and the other is a low performance polymeric material.

3. A control line according to Claim 1 or Claim 2, wherein the control line (1) comprises a number of tubes (2, 3), each tube (2, 3) being encased in a separate inner sheath (4, 5) and tubes (2, 3).

4. A control line according to Claim 3, wherein each inner sheath (4, 5) is colour coded.

5. A control line according to any of the preceding Claims, wherein the inner sheath (4, 5) has a substantially cylindrical outer surface.

6. A control line according to any of the preceding Claims, wherein one or both of the inner sheath (4, 5) and outer sheath (6) comprise different polymeric nutrients on different portions of the respective inner and/or outer sheath (4, 5, 6) along the longitudinal axis of the control-line (1).

7. A method of manufacturing a control line for use in a borehole comprising forming a sheath on a tube (2, 3) by extruding an inner sheath (4, 5) of a first extrudable polymeric material onto the tube (2, 3), and then extruding an outer sheath (6) of a second extrudable polymeric material onto the inner sheath (4, 5).

8. A control line for use in a borehole comprising a tube (2, 3) through which a control signal or a fluid may be passed from a control station to a remote location in the borehole, and a sheath comprising a first extrudable polymeric material (11) on a first portion of the line and a second extrudable polymeric material (12) on a second portion of the control line adjacent to the first portion along the longitudinal axis of the line.

9. A control line according to Claim 7, wherein one of the first and second polymeric material (11, 12) is a high performance polymeric material and the other is a low performance polymeric material.

10. A method of manufacturing a control line for use in a borehole comprising forming a sheath on a tube (3) by extruding a first polymeric material (11) onto a first portion of the tube, and extruding a second polymeric material (12), which is melt compatible with the first polymeric material (11), onto a second portion of the tube, adjacent to the first portion along the longitudinal axis of the line, such that the sheath is continuous between the first and second portions.

FIG.1

FIG.2

FIG.3